# EUROPEAN PATENT SPECIFICATION

(11) **EP 0 417 267 B1**
(45) Date of publication and mention of the grant of the patent: **20.09.1995**
(21) Application number: 90906468.5
(22) Date of filing: 29.03.1990
(51) Int. Cl.: H04Q 7/00, G07C 9/00

(54) **VEHICLE TIRE IDENTIFICATION SYSTEM**
NACHWEISSYSTEM FÜR FAHRZEUGREIFEN
SYSTEME D'IDENTIFICATION DE PNEUS DE VEHICULES

(30) Priority: 31.03.1989 US 331409
(43) Date of publication of application: 20.03.1991
(73) Proprietor: Hughes Aircraft Company, Los Angeles, California 90045-0066 (US)
(72) Inventor: MALMER, Michael, M., Louisville, CO 80027 (US); PATTEN, Whitney, Denver, CO 80210 (US)
(74) Representative: Hackett, Sean James
(86) International application number: US9001754
(87) International publication number: WO9012474

(56) References cited:
- US-A- 3 770 040
- US-A- 4 319 220
- US-A- 4 578 992
- US-A- 4 588 978
- US-A- 4 730 188
- PATENT ABSTRACTS OF JAPAN vol. 13, no. 143 (M-811)(3491) 7 April 1989 & JP-A-63 306 905

## Description

### Technical Field

The present invention relates to apparatus and methods of automatically identifying vehicle tires. More particularly, the present invention relates to systems including passive transponders which respond to interrogation by an electromagnetic field at radio frequencies (RF) by returning a digitally encoded signal which uniquely identifies the interrogated device. While not necessarily limited thereto, the present invention is especially useful for dynamically identifying vehicle tires of all kinds and in widely varying environments.

### Backgound Art

For many years vehicle tires were identified through serial numbers stamped on their sidewalls. Difficulty in reading those numbers automatically and the ease with which the numbers are obliterated has caused interest to evolve towards some form of automatic system. For instance, U.S. Patent 2,920,674 to Bull molded magnetizable strips into the bead of the tire with digital magnetic encoding on those strips intended for detection by a magnetic field detector.

Another configuration of magnetic material in a coded structure is shown in U.S. Patent 3,233,647 by Newell which selectively removes portions of electromagnetic material to establish a digital code on a magnetic strip embedded into the tire. Unfortunately such devices are subject to loss of the magnetic field generator during normal use of the tire. Worse, they require the user to locate the magnetic strips and then to move the magnetic detector over the code elements in such a way as to detect the indicia the magnetic fields represent.

Earlier attempts to use inductively coupled RF identification systems in tires utilized transponders which were developed for general purpose identification of objects, animals, or persons. These transponders were small in size, ranging from a 2.11 mm (.083˝) diameter x 12.5 mm (1/2˝) long injectable transponder, to a transponder 102 mm x 127 mm x 25 mm (4˝ x 5˝ x 1˝) in size. Some transponders were limited in range such as about 45 cm (1.5 feet). When such a transponder was embedded or placed in the tire, it was necessary to physically move the interrogator coil around the periphery of the tire in order to locate the transponder.

Advances in technology have made it possible to produce relatively small, integrated circuit chips which respond to an interrogation signal at their receiving antenna to produce a digitally encoded response signal. Earlier versions required a battery or other independent source of power which rendered them unacceptable for tire usage particularly in view of the hostile environment in which they must function. Thus interest turned to development of passive transponders.

A particularly attractive arrangement of a passive identification transponder is taught in commonly assigned U.S. Patent 4,730,188 by Milheiser. By attaching such a transponder to the sidewall or even to the inner wall of a tire, it is possible to produce a recognizable identification signal by passing an interrogator/receiver wand over the tire until it is in proximity to the location of the transponder. While this is a marked improvement over the prior art, it still requires the user to locate the transponder element that is in or on the tire by moving the wand around the tire perimeter. This makes it difficult to identify the individual tires in a stack and makes it extremely difficult to dynamically sample identification data as the tires mounted on a vehicle are moving past a reading station.

In order to use a tire transponder with an interrogator coil buried in the roadway, it was necessary to have an interrogator coil of a dimension, in the direction of travel, larger than the circumference of the tire so that the transponder passes in close proximity to the ground at some point within the interrogator coil. Then, if dual wheels or tandem axles were used, multiple transponders might respond at the same time to the same interrogation signal.

Other transponder-interrogator systems having longer reading range have the disadvantage that tires stacked in close proximity in a warehouse, or dual tires on trucks defy satisfactory identification on an individual basis, because of the problem of multiple transponders responding at the same time to the same interrogation signal.

Japanese Patent Abstract JP-A-63 306 905 relates to a tire air pressure detector in which a tire is provided with a loop-like conductor and a resonant circuit. An external coil and appropriate circuitry is used in conjunction with the loop-like conductor and resonant circuit to detect changes in air pressure within the tire.

U.S. Patent Specification 4,319,220 is also directed to a system for monitoring pressurised vehicular tires in which information concerning the tire pressure can be communicated to detection equipment.

### Disclosure of the Invention

A primary object of the invention is to provide a system for identifying a tire consisting of two units. One is a passive transponder embedded in the tire to respond to interrogation with a unique identifying code. The other unit is a separate interrogator-reader which is advantageously configured to interface with the transponders.

According to the present invention there is provided an apparatus for electronically identifying bodies as defined in claim 1.

According to the present invention, there is a method for electronically identifying bodies as defined in claim 10.

The transponder consists of a coil of wire embedded in the periphery of the tire. The coil is coupled to an electronic circuit. The transponder is preferably powered from the interrogating unit by way of inductive coupling. The transponder produces a signal which is fed back through the inductive coupling to the interrogator unit. This signal may contain any combination of static and/or dynamic data such as the identification number of the tire, the temperature and pressure of the tire and/or its environment, etc..

A relatively small interrogator coil placed anywhere around the periphery of the tire can cause the transponder to respond. The coupling between interrogator coil and transponder coil is controllable so that the transponders in adjacent tires (e.g.: in dual wheels, tandem axles, or in warehouse stacks ) do not respond in a manner which would cause difficulty in obtaining individual tire identification.

In accordance with embodiments of this invention, an interrogator coil is located in such a way that individual tires are identifiable without interference from other tire transponders in the vicinity. As is apparent from the subsequent detailed description, it is possible to obtain this result by embedding the coil in a roadway. By proper placement of the coil with respect to the path of vehicle travel, it is possible to sequentially detect individual tires on a moving vehicle.

Preferably the transponder coil, when positioned under the tread surface of the tire, is oriented with sufficient spacing from the tire tread so that the tread itself will wear away before the coil is exposed.

Still further, it is possible to accommodate output signals from condition sensors associated with the tire. The signal generator can respond to these sensors by transmitting encoded information corresponding to the sensed tire condition or conditions in addition to the other information which uniquely identifies the signal generator. Note that the signal generator can transmit the encoded signals by introducing them to the same coil that is energized by the predetermined signal.

With the predetermined signal at a first frequency, the signal generator means can convert this predetermined signal to a different frequency for the encoded signal transmission. This makes it possible to concurrently transmit the encoded signal while receiving the predetermined signal.

Preferably the coil and the signal generator are embedded in the tire with the coil in spaced relation to the tire bead in the inner periphery thereof. While data communication is facilitated by positioning the coil under the tread surface of the tire, it should have sufficient spacing therefrom so that the tire tread will wear away before the coil is exposed.

Those having normal skill in the art will recognize the foregoing and other objects, features, advantages and applications of the present invention from the following more detailed description of the preferred embodiments as illustrated in the accompanying drawings.

### Brief Description of the Drawings

FIG. 1 is a block diagram of the system including a reader/exciter unit and a passive integrated transponder (PIT) unit.

FIG. 2 is a side view of a vehicle tire showing the general relationship of one transponder coil wire.

FIGS. 3 and 4 are cross-sectional views of vehicle tires showing several possible locations of transponder coil wires.

FIG. 5 is a schematic view of a multiple turn transponder wire and the integrated circuit with which it interacts.

FIG. 6 is a plan view showing the relationship of vehicle tires with regard to interrogator coils.

### Best Mode for Carrying Out the Invention

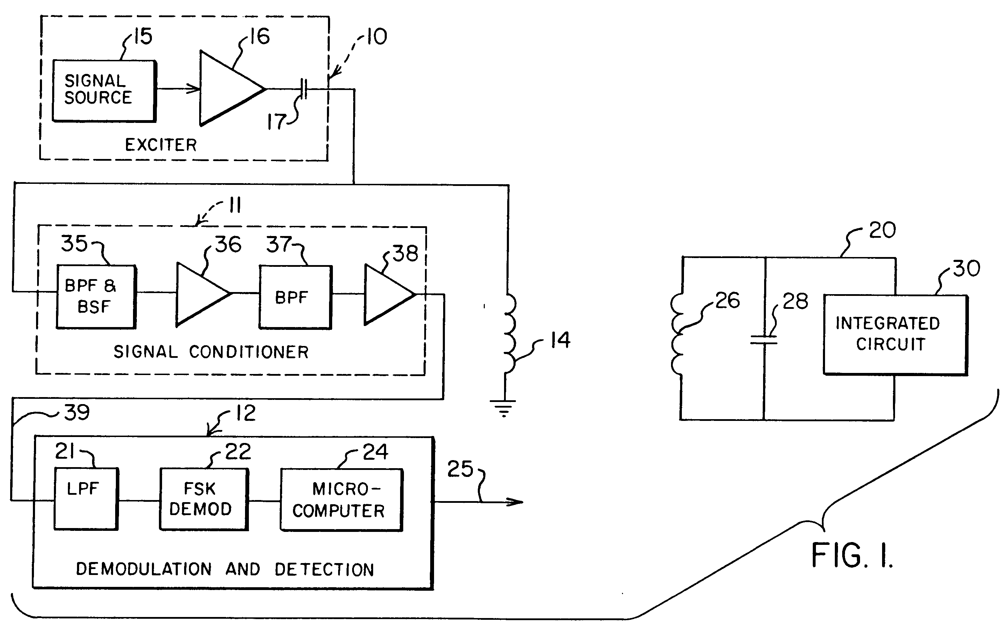

FIG. 1 illustrates in block diagram form the overall operative interrelationships between the electronic components preferably utilized by the present invention. For the interrogator/detector, these include an exciter circuit 10, a signal processing conditioner 11, and a demodulator/detector unit 12 all of which are coupled to the transmitting interrogator coil 14.

The three main functional units of the reader/exciter unit includes the exciter 10, a signal conditioner 11 and the demodulation and detection circuits 12. The exciter 10 consists of an AC signal source 15, followed by a power driver 16 which provides a high current, high voltage excitation signal to the interrogator coil 14 through a capacitor 17. The interrogator coil 14 and the capacitor 17 are selected to resonate at the excitation signal frequency so that the voltage across the coil is much greater than the voltage output from the driver 16.

The signal conditioner 11 connects to the interrogator coil 14 and serves to amplify the identification signal returned from the transponder 20 while filtering out the excitation signal frequency as well as other noise and undesired signals outside of the frequency range used by the transponder signals.

The amplified output of the signal conditioner 11 is fed to the demodulation and detection unit 12 which includes a low pass filter 21 to further reduce excitation signal energy, a frequency shift keyed (FSK) demodulator 22 and a microcomputer 24. The FSK demodulator 22 is a phase-locked loop circuit configured as a tone decoder which gives a digital output as the signal from the transponder 20 shifts between two frequencies. Microcomputer 24 extracts the identification code from this digital output by observing the timing of transitions between the two logic levels.

The identification code obtained by the microcomputer 24 is transferred from output 25 to any of a variety of output devices as desired. Some examples are displays or printers, communication lines coupled to a remote point, tapes, disks or other storage medium, another computer, and so forth.

The transponder 20 consists of an induction coil 26, an integrated circuit 30 and an optional resonating capacitor 28. Induction coil 26 is located such that the magnetic flux generated by the interrogator coil 14 couples energy at the exciter frequency into the transponder. The integrated circuit contains power conversion, frequency conversion, logic, counter and memory circuits which generate a coded signal containing the identification number. This signal is returned to the induction coil 26 and to the interrogator coil 14 via inductive coupling.

Integrated circuit 30 is powered by the signal received from the interrogator coil 14. It also shifts the received signal frequency so that a return signal is transmitted from coil 26 at the same time the interrogator is continuously transmitting its basic frequency. The power converted in circuit 30 drives its logic so as to digitally encode the return signal with intelligence corresponding to the identification of the tire in which transponder 20 is located.

The signal returned by transponder 20 typically will include trains of bits usually starting with synchronization blocks followed by a series of bits that specify the identity of the transponder 20 and thus the identity of the tire with which it is associated. Note that it is possible to include suitable sensors strategically placed in or around the tire to add data fields to the information retuned to the interrogator and detector 12. Details of one way of implementing the functions for circuit 30 are shown in Milheiser Patent 4,730,188.

The signal conditioning network 11 in the interrogator unit includes a series of filters 35 and 37 interconnected with amplifier stages 36 and 38. This provides a band pass function correlated to the shifted frequency produced by transducer 20 to allow that frequency to pass to network output 39 while concurrently blocking the continuous interrogation frequency from exciter 10 and noise from the input to demodulator and detection network 12.

Network 12 employs a low pass filter 21 followed by a frequency shift keyed demodulator 22 so that microcomputer 24 essentially receives the intelligence originated by the integrated circuit 30 of transponder 20.

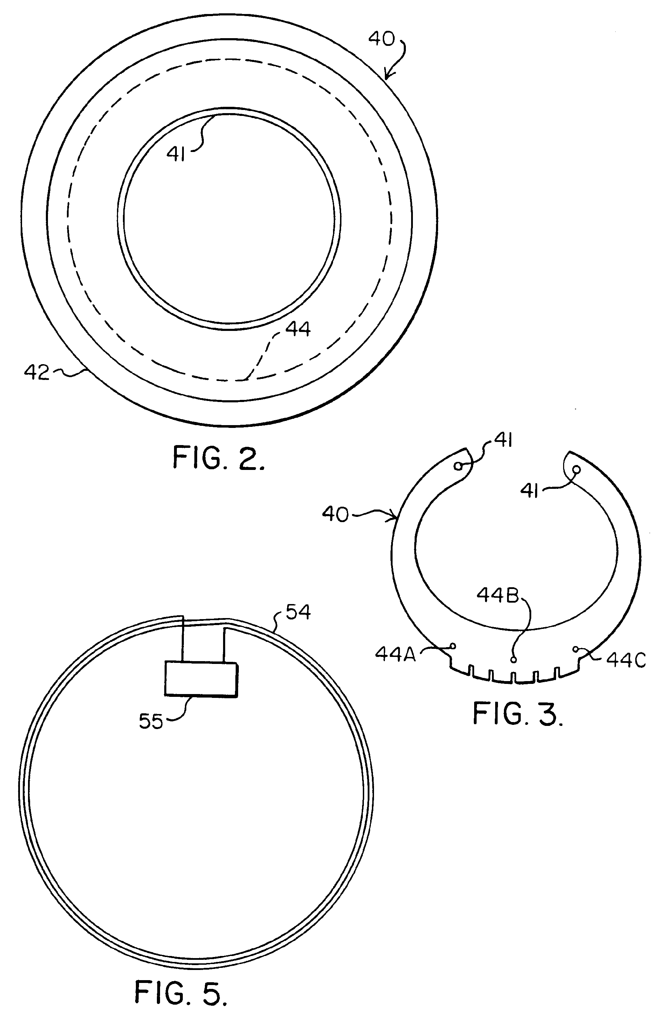

A typical vehicle tire 40 is shown in FIG. 2. Its inner circumference is reinforced by a bead 41 which is a closed loop of wire. The sensitivity of the transponder coil 44 is adversely effected if it is too close to bead 41. Conversely, the tread face 42 is subject to wear and therefore it is important to locate the coil 44 away from the wear hazard of tread 42. Three possible locations 44A, 44B and 44C are illustrated in the cross-sectional view of tire 40 in FIG. 3. That is, wire 44 can assume any of locations 44A or 44C on either side of the sidewall, 44B under the tread face 42, or in any combination of those positions.

Note that by placing transponder wire 44 centrally under the tread 42, the spacing between transponder wires in adjacent tires is optimized and identification of individual tires is enhanced. This is especially useful where the tires are stacked or mounted in dual or multiple wheel configurations.

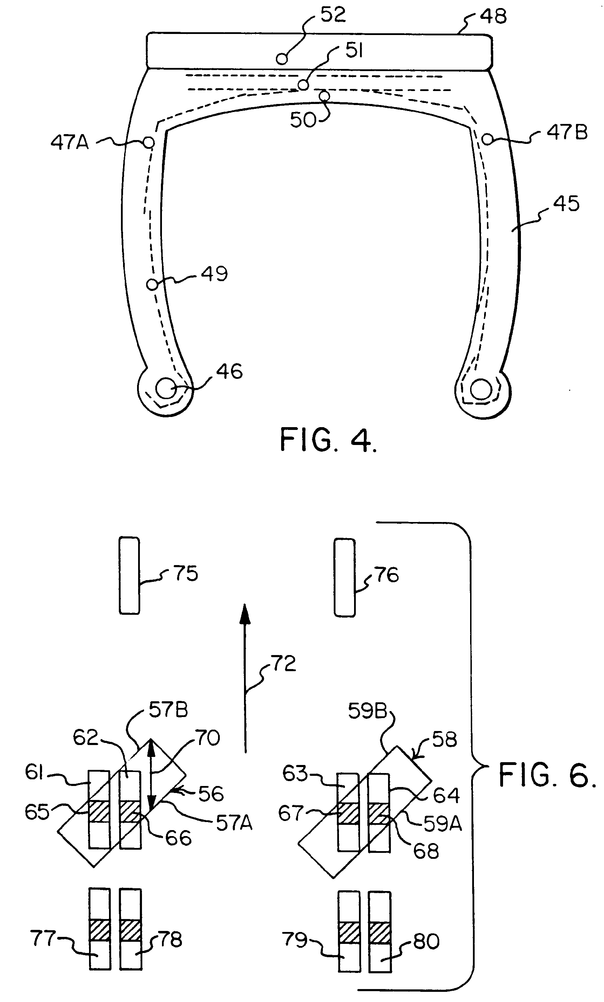

FIG. 4 is a cross-section of another typical tire 45 with the radial reinforcement wires generally shown along with the bead 46. Five alternative locations for transponder wires are depicted in FIG. 4. Somewhat similarly to FIG. 3, wires 47A and/or 47B are embedded in the sidewall far enough from tread 48 so as not to interfere with recapping while minimizing exposure of wire 47 to road hazard damage.

Somewhat surprisingly, location of transponder wire at 50 inside the steel belts but near the inner surface of tire 45 is an acceptable location for the transponder coil. Location of the wires between layers of steel belts as at 51 is likewise acceptable as is location just outside of the belts as at 52. If tire 45 is constructed with wire 52 in the tread 48, it is important that adequate spacing is allowed to avoid damage from road wear or recapping.

Once again, the closer the wire is to the metal loop of central bead 46, the more the RF communication sensitivity is reduced even though bead 46 is not normally grounded. The array of steel reinforcing strands typically present in a steel belted radial tire are generally illustrated in FIG. 4. It was found that location of the transponder coil in close proximity to these tire belts and even in electrical contact with them does not significantly disturb the electromagnetic communication between the interrogator and the transponder. Perhaps this is because the steel reinforcing belts of the tire are electrically floating and insulated from bead 46.

FIG. 5 is a schematic of a typical tire transponder but without the tire. Transponder coil 54 is formed of one or more turns (three are shown in FIG. 5) of insulated wire or bare wire separated by insulating rubber in the manufacturing process.

Acceptable materials for the wire include steel, aluminum, copper or other electrically conducting wire. The wire diameter is not generally considered critical for operation as a transducer. For durability, stranded steel wire consisting of multiple strands of fine wire is preferred. Other wire options available include ribbon cable, flexible circuits, conductive film, conductive rubber etc.

The integrated circuit of electronic module 55 is packaged or mounted on a circuit board or substrate providing for attachment of the transponder coil wires 54 by any suitable means including welding, soldering, bonding or suitable cement. The assembly of coil 54 and module 55 as shown in FIG. 5 is as it might appear just before it is implanted in the mold for the fabrication of the complete tire. An alternative is to wind the transponder coil as part of, or during, the tire fabrication process.

The type of wire and number of loops in the coil for the transponder is a function of the anticipated environment of tire use and the preferred distance of interrogator communication. While in a typical truck tire, six loops of thirty gauge copper wire operated satisfactorily, copper may have a somewhat greater tendency to break from the repetitive stresses associated with normal tire use. Thus other material more tolerant of flexing and tire usage environments such as steel may prove more desirable for the coil wires in some applications.

The greater the number of loops of the transponder coil, the greater the distance of successful interrogation of a given tire transponder. Conversely, the greater the distance of interrogation, the more difficult it is to differentiate between responses from particular tires. It was found that use of six loops embedded in the sidewall of a truck tire just below the tread produced signals that could differentiate between tires relative to a hand wand interrogator even when the tires were stacked or in dual mounting relationships.

In use, a system in accordance with this invention employs an interrogator coil 14 formed as a loop in an assembly that is brought into proximity to a tire that has a looped coil similar to 54 embedded therein. For instance, coil 14 can take the form of a hand held wand attached to and exciter and detector assembly. By merely bringing the interrogator coil close to the surface of the tire at any point around its periphery, an electromagnetic coupling is established between the coil 14 and the transponder coil so that the energy and data interchange therebetween occurs along the lines of that described above.

Thus, a user can take a hand held wand and run it down a stack of tires so as to automatically record the actual identity of every tire in the stack. By well known data processing techniques, a complete and remarkably accurate inventory record of the tires is thereby available.

FIG. 6 illustrates an arrangement of elements for dynamically identifying vehicle tires while they are in use. It is a plan view of the outline of the tires of a truck relative to interrogator coils 56 and 58 each of which functions in a manner similar to interrogator coil 14 in FIG. 1. The vehicle tires in FIG. 6 are presumed to initially pass over leading edges 57A and 59A of interrogator coils 56 and 58, respectively. Tires 61-64 each have embedded transponders and are capable of responding to the interrogator coils within a respective transponder read zone 65-68 corresponding to the general area of ground engagement by the tire in which they are embedded.

The tire transponder is successfully read whenever and interrogator coil 56 or 58 edge is under the reading zone such as 65-68. The spacing 70 between the leading edge 57A or 59A and its corresponding trailing edge 57B or 59B for interrogator coils 56 and 58 is selected large enough so that both edges cannot intercept a reading zone concurrently.

Thus as tires 61 and 63 encounter the leading edges 57A and 59A of coils 56 and 58, transponders associated with zones 65 and 67 are read and the tires identified. Of course condition and/or environmental data is detectable from these transducers at the same time. Shortly thereafter, the transducer zones 66 and 68 encounter leading edges 57A and 59A so that data relating to tires 62 and 64 is communicated to the interrogator detector.

Note that a cross check of the previously read data is possible for each of these tires as they encounter the trailing edges 57B and 59B while leaving the area defined by interrogator coils 56 and 58. Similar readings are available for all the other tires 75-80 of the vehicle as it passes over coils 56 and 58. Furthermore, the system is bidirectional in that it can read the transponders equally well if the vehicle is traveling in a direction opposite arrow 72.

Interrogator coils such as 56 and 58 are placed in the roadway with wires at an angle, normally about 45° to the direction of vehicle travel over interrogator coil wires. At the point coils 56 and 58 are initially encountered by tires 61 and 63, their companion tires 62 and 64 are still far enough away that their transponders do not respond at the same time as those for tires 61 and 62. The two edges of the loop are spaced far enough apart so that edges of the interrogator coil are not both close to the transponder wires at the same time.

Note that loop 58 can angle inwardly if desired so that the outer tires 61 and 64 are both read first and inner tires 62 and 63 read immediately thereafter. Note further that a single interrogator loop could achieve reading of all tires by extending its length completely across the vehicle roadway at an angle for accommodating the sequential reading of transponders.

By maintaining a memory profile of the vehicles and their tires, it is possible by this system to monitor where they as well as the condition of the tires. Of course the system is well suited for a remarkably wide variety of applications such as dynamically detecting the presence of stolen tires from interrogators embedded in the streets.

While the exemplary preferred embodiments of the present invention are described herein with particularity, those having normal skill in the art will recognize various changes, modifications, additions and applications other than those specifically mentioned herein without departing from the scope of this invention, as defined by the appended claims.

## Claims

1. Apparatus for electronically identifying bodies comprising:
a coil (44);
signal generator means (20) attached to said coil for responding to the presence of predetermined signals at said coil by transmitting a signal encoded with information uniquely identifying said signal generator means;
means for producing said predetermined signal for energising said coil whenever said producing means is brought into proximity to the body;
means for detecting said encoded signal transmitted from said signal generator; and
a second coil for receiving said encoded signal transmitted from said signal generating means and for introducing said received signals to said detecting means;
characterised in that:
the coil (44) comprises at least one conductive wire loop;
the body is a vehicle tire (40) having sidewall and tread surfaces;
means is provided for securing said coil and said signal generator means to said tire with said coil positioned with the loop thereof in a relatively constant relationship relative to one of said tire surfaces; and
said second coil is positioned in a path of travel of said tire whereby said encoded signal transmission is retrievable dynamically, and has spaced, generally parallel edges oriented at an angle relative to the direction of travel of said tire along said path, whereby the apparatus can differentiate between encoded signal transmissions from multiple tires.

2. An apparatus according to claim 1, wherein said coil is positioned under said tread surface of said tire but with sufficient spacing therefrom so that said tire tread will wear away before said coil is exposed.

3. An apparatus according to claim 1 or 2, including means for sensing a condition associated with said tire, said signal generator means including means responsive to said sensing means for transmitting encoded information corresponding to said sensed tire condition in addition to said information uniquely identifying said signal generator means.

4. An apparatus according to claim 1, 2 or 3, wherein said signal generator means introduces said encoded signal to said coil for transmission.

5. An apparatus according to any one of the preceding claims, wherein said predetermined signal is at a first frequency and said signal generator means includes means for converting said predetermined signal to a different frequency for said encoded signal transmission whereby said encoded signal is transmitted concurrently with reception of said predetermined signal.

6. An apparatus according to claim 5, wherein said coil and said signal generator are embedded in said tire with said coil in spaced relation to the tire bead in the inner periphery thereof.

7. An apparatus according to any one of the preceding claims, wherein the coil is embedded within the tire with a relatively constant spacing under the tire tread surface.

8. An apparatus according to any one of the preceding claims, wherein the coil is formed of multiple loops connected serially.

9. An apparatus according to any one of the preceding claims, wherein the second coil comprises a pair of coils positioned for passage of tires thereover from respective sides of the vehicle.

10. A method for electronically identifying bodies comprising:
attaching a signal generator means (20) and loop (44) of electrically conductive material to a body;
energising said loop by bringing an interrogator (10) into the proximity of the body;
receiving predetermined signals at said loop from the interrogator;
transmitting a signal encoded with information uniquely identifying said signal generator means in response to the predetermined signals; and
receiving in a coil (14) of the interrogator said encoded signal and introducing said received signals to detection means(12);
characterised by:
positioning the loop (44) and said signal generating means in a vehicle tire, the loop being positioned in a relatively constant relationship relative to one of said tire surfaces; and
positioning said interrogator coil in a path of travel of said tire such that its spaced generally parallel edges are oriented at an angle relative to the direction of travel of said tire along said path, whereby said encoded signal transmission is retrievable dynamically and encoded signal transmissions from multiple tires can be differentiated.

11. A method according to claim 10, including embedding the loop within the tire.

12. A method according to claim 10 or 11, including embedding the signal generator means (20) within the tire.

13. A method according to claim 10, 11 or 12, including transmitting the predetermined signals from the interrogator at a first frequency and receiving in the coil of the interrogator said encoded signals at a second frequency.

14. A method according to claim 13, including demodulating said encoded signals at said second frequency to extract information represented by the digital encoding thereof.

## Patentansprüche

1. Vorrichtung zur elektronischen Identifizierung von Körpern, die aufweist:
eine Spule (44);
ein an der Spule befestigtes Signalgeneratormittel (20), um auf eventuelle vorgegebene Signale der Spule zu reagieren durch Aussenden eines codierten Signals mit Information, die das Signalgeneratormittel eindeutig identifiziert;
ein Mittel zum Erzeugen des vorgegebenen Signals, um die Spule zu erregen, wenn das Erzeugungsmittel in die Nähe des Körpers gebracht wird;
ein Mittel zum Erfassen des codierten Signals, das von dem Signalgenerator ausgesendet wird; und
eine zweite Spule zum Empfangen des codierten Signals, das von dem Signalerzeugungsmittel ausgesendet wird, und zum Weiterleiten der empfangenen Signale nach dem Erfassungsmittel;
dadurch gekennzeichnet, daß:
die Spule (44) mindestens eine leitende Drahtschleife aufweist;
der Körper ein Fahrzeugreifen (40) ist, der Seitenwand- und Laufflächenoberflächen hat;
ein Mittel vorgesehen ist, um die Spule und das Signalgeneratormittel an dem Reifen zu befestigen, wobei die Spule mit ihrer Schleife in einem relativ konstanten Abstand von einer der Reifenoberflächen positioniert ist; und
die zweite Spule in einer Fahrbahn für den Reifen positioniert ist, wodurch das ausgesendete, codierte Signal dynamisch wiedergewinnbar ist, und einen gewissen Abstand aufweisende, im allgemeinen parallele Ränder hat, die unter einem Winkel bezüglich der Laufrichtung des Reifens längs der Fahrbahn orientiert sind, wodurch die Vorrichtung zwischen den von mehreren Reifen ausgesendeten, codierten Signalen unterscheiden kann.

2. Vorrichtung gemäß Anspruch 1, wobei die Spule unter der Laufflächenoberfläche des Reifens positioniert ist, aber einen genügenden Abstand davon hat, so daß die Reifenlauffläche abgenutzt ist, bevor die Spule freigelegt wird.

3. Vorrichtung gemäß Anspruch 1 oder 2, die ein Mittel umfaßt, um einen mit dem Reifen verbundenen Zustand zu fühlen, wobei das Signalgeneratormittel ein auf das Fühlermittel reagierendes Mittel umfaßt, um zusätzlich zu der Information, die das Signalgeneratormittel eindeutig identifiziert, codierte Information auszusenden, die dem gefühlten Reifenzustand entspricht.

4. Vorrichtung gemäß Anspruch 1, 2 oder 3, wobei das Signalgeneratormittel das codierte Signal an die Spule weiterleitet, um das codierte Signal auszusenden.

5. Vorrichtung gemäß irgendeinem der vorhergehenden Ansprüche, wobei das vorgegebene Signal eine erste Frequenz hat, und das Signalgeneratormittel ein Mittel umfaßt, um das vorgegebene Signal für die Aussendung des codierten Signals in ein Signal mit einer verschiedenen Frequenz umzuwandeln, wodurch das codierte Signal gleichzeitig mit dem Empfang des vorgegebenen Signals ausgesendet wird.

6. Vorrichtung gemäß Anspruch 5, wobei die Spule und der Signalgenerator in den Reifen eingebettet sind, und die Spule in einem gewissen Abstand von dem bei dem inneren Umfang des Reifens gelegenen Reifenwulst angeordnet ist.

7. Vorrichtung gemäß irgendeinem der vorhergehenden Ansprüche, wobei die Spule mit einem relativ konstanten Abstand von der Reifenlaufflächen-Oberfläche in den Reifen eingebettet ist.

8. Vorrichtung gemäß irgendeinem der vorhergehenden Ansprüche, wobei die Spule aus seriell verbundenen, mehrfachen Schleifen gebildet ist.

9. Vorrichtung gemäß irgendeinem der vorhergehenden Ansprüche, wobei die zweite Spule ein Spulenpaar aus Spulen ist, die für den Lauf der Reifen über die Spulen in einem gewissen Abstand von den Seiten des Fahrzeugs positioniert sind.

10. Verfahren zur elektronischen Identifizierung von Körpern, das die folgenden Schritte aufweist:
Befestigen eines Signalgeneratormittels (20) und einer aus einem elektrisch leitenden Material bestehenden Schleife (44) an einem Körper;
Erregen der Schleife, wozu ein Abfragesender (10) in die Nähe des Körpers gebracht wird;
Empfangen vorgegebener Signale von dem Abfragesender über die Schleife;
Aussenden eines codierten Signals mit Information, die das Signalgeneratormittel eindeutig identifiziert, als Reaktion auf die vorgegebenen Signale; und
Empfangen des codierten Signals in einer Spule (14) des Abfragesenders, und Weiterleiten des empfangenen Signals nach einem Erfassungsmittel (12);
gekennzeichnet durch die folgenden Schritte:
Positionieren der Schleife (44) und des Signalgeneratormittels in einem Fahrzeugreifen, wobei die Schleife in einem relativ konstanten Abstand von einer der Reifenoberflächen positioniert wird; und
Positionieren der Abfragesender-Spule in einer Fahrbahn für den Reifen, und zwar derart, daß die einen gewissen Abstand voneinander aufweisenden, im allgemeinen parallelen Ränder der Spule unter einem Winkel bezüglich der Laufrichtung des Reifens längs der Fahrbahn orientiert sind, wodurch das ausgesendete, codierte Signal dynamisch wiedergewinnbar ist, und zwischen den von mehreren Reifen ausgesendeten, codierten Signalen unterschieden werden kann.

11. Verfahren gemäß Anspruch 10, das die Einbettung der Schleife in den Reifen umfaßt.

12. Verfahren gemäß Anspruch 10 oder 11, das die Einbettung des Signalgeneratormittels (20) in den Reifen umfaßt.

13. Verfahren gemäß Anspruch 10, 11 oder 12, das die Aussendung der vorgegebenen Signale von dem Abfragesender bei einer ersten Frequenz, und das Empfangen der codierten Signale in der Spule des Abfragesenders bei einer zweiten Frequenz umfaßt.

14. Verfahren gemäß Anspruch 13, das die Demodulation der codierten Signale bei der zweiten Frequenz umfaßt, um die durch die digitale Codierung der Signale repräsentierte Information zu extrahieren.

## Revendications

1. Appareil d'identification électronique de corps comprenant:
une bobine (44);
un moyen générateur de signaux (20) fixé à ladite bobine pour répondre à la présence de signaux prédéterminés au niveau de ladite bobine en transmettant un signal codé d'informations identifiant univoquement ledit moyen générateur de signaux;
un moyen pour produire ledit signal prédéterminé pour exciter ladite bobine à chaque fois que ledit moyen producteur est mis à proximité du corps:
un moyen pour détecter ledit signal codé transmis par ledit générateur de signaux; et
une deuxième bobine pour recevoir ledit signal codé transmis par ledit moyen générateur de signaux et pour transmettre lesdits signaux reçus audit moyen détecteur;
caractérisé en ce que:
la bobine (44) comprend au moins une boucle conductrice en fil métallique;
le corps est un pneumatique d'un véhicule (40) comportant des surfaces de flanc et des surfaces de bande de roulement;
il est prévu un moyen pour fixer ladite bobine et ledit moyen générateur de signaux audit pneumatique, ladite bobine étant positionnée de sorte qu'il existe une relation relativement constante entre la boucle correspondante et l'une desdites surfaces du pneumatique; et
ladite deuxième bobine est positionnée dans une voie de déplacement dudit pneumatique, ladite transmission du signal codé pouvant ainsi être extraite de façon dynamique, et comporte des bords espacés généralement parallèles orientés à un angle par rapport à la direction de déplacement dudit pneumatique le long de ladite voie, l'appareil pouvant ainsi différencier les transmissions de signaux encodés de plusieurs pneumatiques.

2. Appareil selon la revendication 1, dans lequel ladite bobine est positionnée au-dessous de ladite surface de la bande de roulement dudit pneumatique, tout en étant suffisamment espacée de celle-ci, de sorte que la bande de roulement du pneumatique sera usée avant l'exposition de ladite bobine.

3. Appareil selon les revendications 1 ou 2, englobant un moyen pour détecter un état associé audit pneumatique, ledit moyen générateur de signaux englobant un moyen répondant audit moyen détecteur pour transmettre des informations codées correspondant audit état détecté du pneumatique, en plus de ladite information identifiant univoquement ledit moyen générateur de signaux.

4. Appareil selon les revendications 1, 2 ou 3, dans lequel ledit moyen générateur de signaux transmet ledit signal codé à ladite bobine en vue de la transmission.

5. Appareil selon l'une quelconque des revendications précédentes, dans lequel ledit signal prédéterminé a une première fréquence, ledit moyen générateur de signaux englobant un moyen pour convertir ledit signal prédéterminé en une fréquence différente pour ladite transmission du signal codé, ledit signal codé étant ainsi transmis concurrement à la réception dudit signal prédéterminé.

6. Appareil selon la revendication 5, dans lequel ladite bobine et ledit générateur de signaux sont encastrés dans ledit pneumatique, ladite bobine étant espacée du talon du pneumatique dans la périphérie interne correspondante.

7. Appareil selon l'une quelconque des revendications précédentes, dans lequel la bobine est encastrée dans le pneumatique à un espacement relativement constant au-dessous de la surface de la bande de roulement du pneumatique.

8. Appareil selon l'une quelconque des revendication précédentes, dans lequel la bobine est composée de boucles multiples à connexion sérielle.

9. Appareil selon l'une quelconque des revendications précédentes, dans lequel la deuxième bobine comprend une paire de bobines positionnées en vue du passage de pneumatiques au-dessus d'elles à partir des côtés respectifs du véhicule.

10. Procédé d'identification électronique de corps, comprenant les étapes suivantes:
fixation d'un moyen générateur de signaux (20) et d'une boucle (44) de matériau électroconducteur à un corps;
excitation de ladite bobine en plaçant un interrogateur (10) à proximité du corps;
réception de signaux prédéterminés au niveau de ladite boucle à partir de l'interrogateur;
transmission d'un signal codé d'informations identifiant univoquement ledit moyen générateur du signal en réponse aux signaux prédéterminés; et
réception dans une bobine (14) de l'interrogateur ledit signal codé et transmission desdits signaux reçus à un moyen détecteur (12);
caractérisé par:
le positionnement de la boucle (44) et dudit moyen générateur de signaux dans le pneumatique d'un véhicule, la boucle étant positionnée dans une relation relativement constante par rapport à l'une desdites surfaces du pneumatique; et
positionnement de ladite bobine d'interrogateur dans une voie de déplacement dudit pneumatique, de sorte que ses bords espacés généralement parallèles sont orientés à un angle par rapport à la direction de déplacement dudit pneumatique le long de ladite voie, ladite transmission de signal codé pouvant ainsi être extraite de façon dynamique et des transmissions de signaux codés provenant de plusieurs pneumatiques pouvant être différenciées.

11. Procédé selon la revendication 10, englobant l'encastrement de la bobine à l'intérieur du pneumatique.

12. Procédé selon les revendications 10 ou 11, englobant l'encastrement du moyen générateur de signaux (20) dans le pneumatique.

13. Procédé selon les revendications 10, 11 ou 12, englobant la transmission des signaux prédéterminés de l'interrogateur à une première fréquence et la réception dans la bobine de l'interrogateur desdits signaux codés à une deuxième fréquence.

14. Procédé selon la revendication 13, englobant la démodulation desdits signaux codés à ladite deuxième fréquence pour extraire des informations représentées par le codage numérique correspondant.
